# EUROPÄISCHE PATENTANMELDUNG

(11) **EP 0 714 712 A1**
(43) Veröffentlichungstag der Anmeldung: **05.06.1996**
(21) Anmeldenummer: 95117023.2
(22) Anmeldetag: 28.10.1995
(51) Int. Cl.: B09C 1/02, A62D 3/00

(54) **Verfahren zur Dekontaminierung von Böden**

(30) Priorität: 28.11.1994 DE 4442248
(71) Anmelder: Degussa Aktiengesellschaft, D-60311 Frankfurt (DE)
(72) Erfinder: Luy, Thomas, D-63517 Rodenbach (DE); Kuhn, Frank, D-63571 Gelnhausen (DE)

(57) **Zusammenfassung**

Die Erfindung betrifft ein beschleunigtes Verfahren zur on-site oder off-site Dekontaminierung von mit Bleialkylverbindungen, insbesondere Tetraethylblei, kontaminierten Böden.

Erfindungsgemäß werden Bleiverbindungen mobilisiert, mit Wasser aus dem Boden entfernt, und anschließend aus der wäßrigen Phase abgetrennt: (i) Der Boden wird mit Wasser und einer Quelle für Sauerstoff in einer die Löslichkeit der Bleiverbindungen in Wasser wirksam steigernden Menge kontaktiert, (ii) die erhaltene wäßrige Phase wird vom Boden abgetrennt, (iii) Bleiverbindungen aus der abgetrennten wäßrigen Phase werden mittels chemischer und/oder physikalischer Methoden abgetrennt und (iv) das bleifreie Wasser wird in einen Vorfluter oder in den Boden eingeleitet.

## Beschreibung

Die Erfindung richtet sich auf ein Verfahren zur on-site oder off-site Dekontaminierung von mit Bleialkylverbindungen, insbesondere Tetraethylblei (TEL), kontaminierten Böden, wobei die Bleiverbindungen mittels einer wäßrigen Lösung aus dem Boden entfernt werden und die wäßrige Lösung anschließend von Bleiverbindungen befreit wird.

Organobleiverbindungen, wie Tetraethylblei und Tetramethylblei, werden als Antiklopfmittel Benzin zugemischt. In Produktionsanlagen zur Herstellung von Organobleiverbindungen ließ sich, wie Boden- und Grundwasseruntersuchungen zeigten, eine Kontaminierung des Bodens mit Organobleiverbindungen nicht vollständig vermeiden. Derart kontaminierte Böden müssen heute dekontaminiert werden, um einen unkontrollierten Austrag der Schadstoffe in das Grundwasser zu vermeiden.

Es wurde festgestellt, daß ein Teil der in den Boden gelangten Organobleiverbindungen beim Durchsickern von Regenwasser durch einen wasserungesättigten Boden oder bei direktem Kontakt des Grundwassers mit dem kontaminierten Boden durch biologischen Abbau teilweise gelöst und in den Wasserpfad eingetragen wird. Durch Einbringen von Brunnen in den Grundwasserpfad kann das so kontaminierte Wasser abgepumpt oder mittels Entnahmebrunnen gefördert und oberirdisch mittels chemischer und/oder physikalischer Methoden von den Bleiverbindungen befreit und anschließend das bleifreie Wasser wieder in den Boden infiltriert werden. Um ein Abströmen von schadstoffhaltigem Wasser im Boden in eine nicht gewünschte Richtung zu vermeiden, wird mittels Abwehrbrunnen eine hydraulische Barriere errichtet. Nachteilig an diesem Verfahren ist, daß der Gehalt an löslichen Organobleiverbindungen im Wasser niedrig ist. Um eine ausreichende Dekontaminierung des Bodens zu erzielen, müßte daher über einen sehr langen Zeitraum Wasser mit dem kontaminierten Boden kontaktiert und das dabei erhaltene schadstoffhaltige Wasser gereinigt werden.

Ein Verfahren zur Dekontaminierung von Organobleiverbindungen enthaltenden Böden lehrt die WO 94/02211: Bei diesem Verfahren werden die im Boden befindlichen Mikroorganismen durch Zufuhr einer Kohlenstoffquelle, einer Stickstoffquelle und einer Phosphatquelle in ihrem Wachstum aktiviert, wobei die hochtoxischen Organobleiverbindungen zu unlöslichen anorganischen Bleiverbindungen mineralisiert werden. Die Aktivierung der Mikroorganismen kann sowohl aerob als auch anaerob erfolgen. Sofern aerobe Mikroorganismen aktiviert werden sollen, wird zusätzlich eine Sauerstoffquelle, wie Wasserstoffperoxid, eingesetzt. Nachteilig an diesem Verfahren ist, daß komplex zusammengesetzte Nährlösungen verwendet werden müssen, um die gewünschte Stimulierung der Mikroflora zu erzielen. Bei nicht ausreichender Kontrolle kann es zudem zu einem zu großen Abfall der Permeabilität des Bodens kommen, so daß gegebenenfalls bestimmte Bereiche des Bodens nicht mehr dekontaminiert werden können. Ein weiterer bedeutsamer Nachteil besteht darin, daß auch unter optimalen Betriebsbedingungen das Verfahren langwierig und damit kostenaufwendig ist.

Aufgabe der vorliegenden Erfindung ist demgemäß, ein verbessertes Verfahren zur Dekontaminierung von Organobleiverbindung enthaltenden Böden zur Verfügung zu stellen. Vorzugsweise sollte bei der Anwendung des Verfahrens der Boden in kürzerer Zeit dekontaminiert und damit einer neuen Nutzung zugeführt werden, als dies nach dem zuvor gewürdigten Verfahren der Fall war. Das Verfahren sollte zudem eine effektive Dekontaminierung unter wirtschaftlichen Bedingungen ermöglichen.

Gefunden wurde ein Verfahren zur on-site oder off-site Dekontaminierung von mit Bleialkylverbindungen, insbesondere Tetraethylblei, kontaminierten Böden, wobei Bleiverbindungen aus dem Boden entfernt werden, das dadurch gekennzeichnet ist, daß man (i) den Boden mit Wasser und einer Quelle für Sauerstoff in einer die Löslichkeit der Bleiverbindungen in Wasser wirksam steigernden Menge kontaktiert, (ii) die erhaltene wäßrige Phase vom Boden abtrennt, (iii) Bleiverbindungen aus der abgetrennten wäßrigen Phase mittels chemischer und/oder physikalischer Methoden abtrennt und (iv) das bleifreie Wasser in einen Vorfluter oder in den Boden einleitet.

Bei der on-site Dekontaminierung wird der kontaminierte Boden unmittelbar, das heißt, ohne ihn vom Ort der Kontaminationseinwirkung zu entfernen, mit Wasser und einer darin gelösten Quelle für Sauerstoff, insbesondere Wasserstoffperoxid, behandelt, bei der off-site Dekontamination wird der kontaminierte Boden zunächst ausgekoffert, an anderer Stelle in Form einer Miete aufgeschüttet und dann erfindungsgemäß behandelt. Mäßig oder tiefliegende kontaminierte Böden werden zweckmäßigerweise on-site dekontaminiert. Böden mit hoher Kontamination, insbesondere oberflächennahe Böden, werden vorzugsweise off-site behandelt, weil auf diese Weise eine Verschleppung der Bleiverbindungen in tiefere Erdschichten vermieden wird. Bei den Böden kann es sich sowohl um gewachsene Böden als auch um Aufschüttungen aus Bodenaushub, Schlacke, Sand, Bauschutt oder dergleichen handeln.

Erfindungsgemäß lassen sich Bleialkylverbindungen, insbesondere Tetraethylblei, im Boden mobilisieren, indem dem zum Kontaktieren verwendeten Wasser als Quelle für Sauerstoff Wasserstoffperoxid in einer zur Steigerung des Bleigehalts in Wasser wirksamen Menge zugesetzt wird. Zweckmäßigerweise erfolgt das Kontaktieren des Bodens mit Wasser mit einem Wasserstoffperoxidgehalt von 10 bis 1000 mg/l, vorzugsweise 30 bis 300 mg/l.

Als Quelle für Sauerstoff dienen außer Luft und Sauerstoff Persauerstoffverbindungen, wie etwa Perborate und Percarbonate, insbesondere aber Wasserstoffperoxid. Der Vorteil von Wasserstoffperoxid gegenüber den Salzen besteht darin, daß es zu keiner Aufsalzung kommt. Wasserstoffperoxid kann per se oder nach Zersetzung zu Wasser und Sauerstoff wirksam in die Bleimobilisierung eingreifen. Während bei der off-site Dekontaminierung auch eine Begasung mit Luft oder Sauerstoff erfolgen kann, ist eine solche Maßnahme bei der on-site Dekontaminierung wegen des hohen Aufwands weniger bevorzugt. Die Mengenangabe, wonach H₂O₂ in einer zur Steigerung des Bleigehalts in Wasser wirksamen Menge zugesetzt wird, bedeutet, daß der Pb-Gehalt in der aus der Kontaktierung resultierenden wäßrigen Phase bei Verwendung von H₂O₂ als Quelle für Sauerstoff signifikant größer ist als bei Verwendung von luftgesättigtem Wasser.

Bleitetraethyl läßt sich in Gegenwart einer wirksamen Menge einer Sauerstoffquelle, insbesondere Wasserstoffperoxid, größtenteils in besser wasserlösliches Triethylblei überführen, so daß im erfindungsgemäßen Verfahren die Bleikonzentration der wäßrigen Phase, die bei der Kontaktierung des kontaminierten Bodens erhalten wird, wesentlich, vorzugsweise um ein Vielfaches höher ist als bei einer Kontaktierung mit luftgesättigtem Wasser. Durch die genannte Konzentrationserhöhung, etwa eine Verdoppelung bis Verzehnfachung der Bleikonzentration konnte die gesamte Behandlungsdauer des Bodens bis zur ausreichenden Dekontaminierung verkürzt und damit der Boden wieder anderweitig genutzt werden. Infolge mikrobiologischer Prozesse im oberflächennahen Bereich des Bodens nimmt der O₂-Gehalt im luftgesättigten Wasser rasch ab, so daß in tieferen Schichten das O₂-Angebot völlig unzureichend ist. Demgegenüber ist Wasserstoffperoxid auch in tiefen Schichten direkt oder als O₂-Quelle wirksam.

Gemäß einer bevorzugten Ausführungsform wird die Verfahrensstufe (i), also das Kontaktieren des kontaminierten Bodens mit Wasser und einer Quelle für Sauerstoff im Falle der Dekontaminierung wasserungesättigter Böden dergestalt durchgeführt, daß man Wasserstoffperoxid enthaltendes Wasser über dem kontaminierten Boden direkt oder mittels eines Drainagesystems versickern läßt oder mittels Lanzen in den Boden injiziert. Die wäßrige Lösung durchströmt dann die Bodenzone und nimmt dabei lösliche und durch Oxidation löslich gewordene Schadstoffe auf. Nach dem Durchströmen der wasserungesättigten Bodenzone wird in der Stufe (ii) das nun Bleialkylverbindungen enthaltende Wasser über einer wasserundurchlässigen Bodenzone in bekannter Weise, etwa mittels Entnahmebrunnen, entnommen; im allgemeinen wird die Entnahme im Bereich des Grundwasserpfads erfolgen, so daß das durchgesickerte Wasser zusammen mit Grundwasser entnommen wird.

Im Falle der Dekontaminierung eines wassergesättigten Bodens kann Wasserstoffperoxid anstelle des Durchsickernlassens einer wäßrigen Wasserstoffperoxidlösung durch den Boden diese unmittelbar mittels Injektionslanzen in die kontaminierte Zone des Grundwasserbereichs injiziert werden. Strömungsgeschwindigkeit des Grundwassers und die Richtung desselben lassen sich durch Niederbringen eines oder mehrerer Brunnen zwecks Errichtung einer hydraulischen Barriere in bekannter Weise regulieren, so daß das bleikontaminierte Wasser sicher gesammelt und aus dem Bodenbereich entnommen werden kann.

Nach Entnahme des Bleialkylverbindungen enthaltenden Wassers aus der wassergesättigten Bodenzone mittels üblicher Brunnen oder Pumpanlagen wird dieses mittels eines chemischen und/oder physikalischen Verfahrens gereinigt (Stufe (iii)). Das gereinigte Wasser wird anschließend zweckmäßigerweise einem Vorfluter zugeführt oder in den Boden reinfiltriert, etwa mittels Versickerungsbrunnen (Stufe (iv)).

Zur Reinigung des Organobleiverbindungen enthaltenden Wassers kommen adsorptive Maßnahmen infrage: Hierbei wird das kontaminierte Wasser über ein Bett aus wirksamen Adsorptionsmitteln geleitet, wobei die Bleiverbindungen zurückgehalten werden. Geeignete Adsorptionsmittel sind beispielsweise Aktivkohle, Kieselsäuren und silikatische Stoffe, wie Zeolithe.

Eine weitere Maßnahme zur Entfernung der organischen Bleiverbindungen aus dem Wasser besteht darin, dem Wasser eine Quelle für Wasserstoffperoxid, vorzugsweise Wasserstoffperoxid selbst, zuzusetzen und das Gemisch bei 5 bis 20 °C oder erhöhter Temperatur, etwa 30 bis 60 °C, über ein katalytisch wirksames Bett aus wasserunlöslichen anorganischen Stoffen zu leiten. Als im wesentlichen wasserunlösliche anorganische Feststoffkontakte können nachfolgende Stoffe in feinteiliger, granulierter oder tablettierter Form oder in Form beliebiger Formkörper oder auf geformte Träger aufgebrachter Form, allein oder in Mischung eingesetzt werden: Kieselgele, Kieselgur, Fällungskieselsäuren, pyrogene Kieselsäuren, oberflächenmodifizierte Kieselsäuren, natürliche und synthetische Silikate, Zeolithe, Metalloxide oder Mischoxide; die vorgenannten Stoffe können auch auf ihrer Oberfläche Oxide der Elemente Eisen, Chrom, Mangan, Vanadium, Molybdän oder Wolfram aufweisen, wodurch die katalytische Wirksamkeit gesteigert werden kann. Die Katalysatoren aktivieren Wasserstoffperoxid, so daß der oxidative Abbau der Organobleiverbindungen beschleunigt wird. Sofern das Blei bei der Kontaktierung des kontaminierten Wassers mit dem Feststoffkontakt nicht bereits dort in mineralisierter Form fixiert wird, kann das Blei, wie später im einzelnen dargelegt wird, unter Verwendung anorganischer Flockungshilfsmittel aus dem Wasser abgetrennt werden.

Schließlich lassen sich die organischen Bleiverbindungen im Wasser auch durch Behandlung mit a) Wasserstoffperoxid unter UV-Bestrahlung, b) Behandlung mit Wasserstoffperoxid und Ozon sowie c) Behandlung mit Wasserstoffperoxid in Gegenwart von Eisensalzen (Fenton's Reagenz) oxidativ abbauen. Die Methode a) ist den anderen Methoden gegenüber überlegen. Nach der Behandlung gemäß a), b) und c) muß das in nicht oder ungenügend filtrierbarer Form im behandelten Wasser enthaltene Blei mittels einer weiteren Maßnahme, etwa der Abtrennung unter Verwendung von anorganischen Flockungshilfsmitteln aus dem Wasser abgetrennt werden.

Es wurde festgestellt, daß bereits durch UV-Bestrahlung eines Organobleiverbindungen enthaltenden Wassers ein Abbau der Bleiverbindungen erfolgt. Dieses Verfahren läßt sich in der Praxis allerdings nicht im Dauerbetrieb verwerten, weil sich auf den verwendeten UV-Strahlern ein Bleispiegel ausbildet. Die Bildung eines Bleispiegels wird erfindungsgemäß durch die Mitverwendung einer Quelle für Hydroxylradikale, wie Wasserstoffperoxid, im zu bestrahlenden Wasser verhindert. Der Fachmann wird die optimale Menge Wasserstoffperoxid durch orientierende Vorversuche ermitteln und eine solche Menge Wasserstoffperoxid einsetzen, welche eine Verspiegelung der UV-Strahler wirksam verhindert. Ein H₂O₂-Gehalt im Bereich von 25 bis 100 mg H₂O₂/l hat sich als üblicherweise ausreichend wirksam erwiesen. Sofern die von Bleiverbindungen zu befreiende wäßrige Phase einen hohen Gehalt an Gesamtschwefel enthält, muß eine entsprechend erhöhte Menge an H₂O₂ eingesetzt werden. Sofern das zu behandelnde Wasser einen hohen CSB-Wert (CSB = Chemischer Sauerstoffbedarf), etwa durch einen hohen Gehalt an Gesamtschwefel, aufweist und dieser zusätzlich erniedrigt werden soll, wird die eingesetzte Menge an Wasserstoffperoxid dem abzubauenden CSB-Wert entsprechend erhöht. In der Praxis wird die Zugabemenge an Wasserstoffperoxid im Bereich der 0,1- bis 5-fachen, insbesondere der 0,1- bis 2-fachen, äquivalenten Menge des CSB-Wertes des zu behandelnden Wassers liegen.

Zur UV-Bestrahlung des Wassers kommen übliche Strahlungsquellen infrage, also Niederdruck-, Mitteldruck- oder Hochdruckstrahler, wobei die letzten beiden Typen, zwischen welchen oft nicht differenziert wird, bevorzugt werden. Bei Verwendung von Hoch- beziehungsweise Mitteldruckstrahlern mit einer Strahlung im Bereich zwischen 185 und 400 nm liegt der Eintrag an elektrischer Strahlerenergie pro m³ des zu behandelnden Wassers üblicherweise im Bereich zwischen 1 und 30 kWh, insbesondere zwischen 1 und 15 kWh. Mit zunehmendem Energieeintrag nimmt die Rate an abgebauten Organobleiverbindungen zu; Abbauraten um und über 90 % lassen sich bei 10 bis 15 kWh/m³ erzielen. Die Bestrahlung des Bleialkylverbindungen und zugesetztes Wasserstoffperoxid enthaltenden Wassers kann in beliebigen Batch- oder vorzugsweise in Durchflußreaktoren durchgeführt werden.

Wie bereits oben angedeutet, führt die Behandlung mit Wasserstoffperoxid unter UV-Bestrahlung zwar zu hohen Abbauraten an Organoblei, jedoch nicht unmittelbar zu ausreichend bleifreiem Wasser. Mittels unterschiedlichster Filtrationsmaßnahmen, einschließlich solcher unter Verwendung von Membranfiltern, war es nicht möglich, den Gesamtbleigehalt auf Werte entsprechend dem Rest-Organobleigehalt abzusenken. Es wurde aber nun gefunden, daß sich der Gesamtgehalt an Blei (Summe aus organisch gebundenem Blei und anorganischem Blei) im Wasser auf Werte um 5 bis 30 ng/l absenken läßt, wenn dem Wasser ein Flockungshilfsmittel aus der Reihe Metallhydroxidflocken bildender Metallverbindungen in wirksamer Menge zugesetzt und der Niederschlag vom Wasser abgetrennt wird. Zwecks Ausbildung eines flockigen Niederschlags kann es erforderlich sein, den pH-Wert auf 6 bis 8 einzustellen. Als Flockungshilfsmittel haben sich im erfindungsgemäßen Verfahren insbesondere wasserlösliche Eisen- oder Aluminiumsalze als besonders geeignet erwiesen; auch Aluminatlauge oder frisch gefällte Metallhydroxidschlämme können zur Flockung eingesetzt werden. Bevorzugte Flockungsmittel sind Eisen(II)- oder Eisen(III)-chlorid, Fe(II)- oder Fe(III)-sulfat sowie Aluminiumchlorid oder -sulfat. Die Einsatzmenge der genannten Flockungsmittel richtet sich einerseits nach dem vorhandenen Bleigehalt andererseits auch nach den verfügbaren Filtrationseinrichtungen. Pro µMol Bleiverbindung werden im allgemeinen 1 bis 1000 µMol, vorzugsweise 10 bis 100 µMol, Flockungsmittel eingesetzt. Die Abtrennung des gebildeten Hydroxidniederschlags, worin das Blei gebunden ist, kann durch Filtration oder Zentrifugieren erfolgen. Infrage kommen beispielsweise Tiefenfilter, Oberflächenfilter, Anschwemmfilter, Cricketfilter (Kombination aus einem Vertikal-Druckblattfilter und einem Kerzenfilter), Ultrafilter und Membranfilter, beispielsweise solche mit einer Teflonmembran mit einer Porenweite um 0,15 µm. Das nach der Abtrennung des Niederschlags erhaltene bleifreie Wasser kann, sofern erwünscht, über Aktivkohleadsorber geleitet werden. Anschließend kann das Wasser einem Vorfluter zugeführt oder in den Boden reinfiltriert oder nach Zugabe von Wasserstoffperoxid zur erneuten Verwendung zur Dekontaminierung des Bodens eingesetzt werden.

Durch die erfindungsgemäße Behandlung des mit Bleialkylverbindungen kontaminierten Bodens ist es möglich geworden, die Bleiverbindungen in erheblichem Umfang zu mobilisieren und sie zusammen mit dem Wasser aus dem Boden auszutragen; die Abtrennung des Bleis aus dem ausgetragenen Wasser gelingt bis zu einem Restgehalt an Gesamtblei von 5 bis 30 µg/l, wenn das Wasser in Gegenwart von Wasserstoffperoxid unter Verwendung einer UV-Strahlungsquelle bestrahlt und nach Zugabe eines anorganischen Flockungshilfsmittels filtriert wird. Die Entfernung der Bleiverbindungen aus dem Boden erfolgt viel rascher und damit wirtschaftlicher als deren Mineralisierung im Boden nach dem vorbekannten Verfahren. Die Gefahr einer Remobilisierung ist erfindungsgemäß nicht gegeben, weil das Blei aus dem Boden entfernt wird. Ein weiterer Vorteil des erfindungsgemäßen Verfahrens besteht auch darin, daß dem zum Kontaktieren verwendeten Wasser ausschließlich Wasserstoffperoxid, nicht aber mehrere Stoffe zugesetzt werden müssen.

### Beispiele 1 und 2, Vergleichsbeispiele 1 und 2

Im Labormaßstab wurde die Mobilisierung von Tetraethylblei untersucht:
Es wurden 4 mit Aluminiumfolie ummantelte Glassäulen mit je 800 g sandigem Boden gefüllt und mit Wasser angeschlämmt. Auf jede Säule wurden 5 g Tetraethylblei aufgegeben und versickern gelassen. 2 Säulen wurden mit luftgesättigtem Wasser durchspült (Vergleichsbeispiele 1 und 2), die beiden anderen Säulen mit luftgesättigtem Wasser, dem Wasserstoffperoxid in einer Menge von 100 mg H₂O₂/l zugesetzt wurde (Beispiele 1 und 2). Der Durchfluß betrug jeweils 0,2 ml/min. - dies entspricht bei der gegebenen Säulendimensionierung einer üblichen Grundwasser-Fließgeschwindigkeit. Das Auslaufwasser wurde aufgefangen und auf organisch gebundenes Blei analysiert. Wie aus der Tabelle hervorgeht, konnte durch Verwendung von Wasserstoffperoxid enthaltendem Wasser die eluierte Bleimenge gegenüber dem H₂O₂-freien Wasser verdoppelt werden. Der Bleigehalt im Eluat der Vergleichsbeispiele, wird darauf zurückgeführt, daß das Wasser luftgesättigt war und somit Tetraethylblei teilweise in Triethylblei überführt wurde.

**Tabelle 1**

| Beispiel | Versuchsdauer (Tage) | Durchfluß (ml/min) | Zugabe H₂O₂ (mg/l) | ges. org. Blei (mg/l) |
|---|---|---|---|---|
| VB 1 | 1 | 0,2 | - | 7,5 |
| VB 2 | 1 | 0,2 | - | 7,5 |
| B 1 | 1 | 0,2 | 100 | 12,5 |
| B 2 | 1 | 0,2 | 100 | 13,8 |
| VB 1 | 2 | 0,2 | - | 7,0 |
| VB 2 | 2 | 0,2 | - | 5,9 |
| B 1 | 2 | 0,2 | 100 | 10,6 |
| B 2 | 2 | 0,2 | 100 | 11,0 |
| VB 1 | 3 | 0,2 | - | 5,8 |
| VB 2 | 3 | 0,2 | - | 5,2 |
| B 1 | 3 | 0,2 | 100 | 9,4 |
| B 2 | 3 | 0,2 | 100 | 8,8 |
| VB 1 | 6 | 0,2 | - | 5,2 |
| VB 2 | 6 | 0,2 | - | 4,5 |
| B 1 | 6 | 0,2 | 100 | 9,0 |
| B 2 | 6 | 0,2 | 100 | 9,5 |
| VB 1 | 7 | 0,3 | - | 5,0 |
| VB 2 | 7 | 0,3 | - | 4,0 |
| B 1 | 7 | 0,3 | 100 | 9,0 |
| B 2 | 7 | 0,3 | 100 | 10,5 |

### Bestimmung des Gehalts an gesamtorganischem Blei in wäßrigen Proben

### Prinzip:

Die organischen Bleiverbindungen werden mit Jodmonochlorid zu Dialkylen abgebaut. Durch Pufferung wird dieser Ansatz zur Extraktion mit einer Dithizon-Chloroformphase vorbereitet und unter Zugabe von EDTA alle anorganischen Metalle maskiert, so daß wirklich nur die organischen Bleiverbindungen an das Dithizon gebunden werden. Dieser Komplex wird dann durch eine zweite Extraktion mit einer salpetersauren Wasserstoffperoxidlösung zerstört, so daß dann das organische Blei mittels AAS (Atomabsorptionsspektroskopie) bestimmt werden kann.

### Benötigte Chemikalien:

Jodmonochloridlösung: 565 g Kaliumjodid werden in ca. 1,5 l Wasser gelöst und mit 2,5 l konzentrierter Salzsäure versetzt. Nach spontaner Zugabe von 382 g Kaliumjodat wird bis zur klaren Lösung gerührt.
Pufferlösung: 14 g Triammoniumcitrat und 30 g Natriumsulfit (wasserfrei) werden in ca. 500 ml Wasser gelöst. Nach Zugabe von 250 ml ca. 30 %iger Ammoniaklösung wird auf 1 Liter aufgefüllt.
EDTA-Lösung: 37 g Na-EDTA werden in 1 Liter Wasser gelöst. Dithizon-Lösung: 10 mg Dithizon werden in 500 ml Chloroform gelöst.
Salpetersäure-Wasserstoffperoxidlösung: Je 50 ml konzentrierter Salpetersäure und 30 %ige Peroxidlösung werden auf 1 Liter mit Wasser aufgefüllt.

### Durchführung:

100 ml Probe werden in einem braunen Scheidetrichter mit 10 ml Jodmonochloridlösung versetzt und 5 Minuten stehen lassen. Danach werden mit einem Kippautomaten 50 ml Pufferlösung 10 ml EDTA-Lösung zugegeben und bis zum vollständigen Jodabbau geschwenkt. Nach Zugabe von 30 ml Dithizonlösung wird 30 Sekunden geschüttelt und absetzen lassen. Die Chloroformphase wird dann in einen zweiten Scheidetrichter abgelassen, in dem sich 10 ml der Säurelösung befinden. Dann werden in den ersten Trichter nochmals 30 ml Chloroform gegeben und extrahiert, nach Absetzung wird die untere Phase zur ersten Extraktion gegeben. Der zweite Trichter wird auch 30 Sekunden geschüttelt. Nach akkuratem Ablassen der Chloroformphase wird die saure Phase an einem AAS-Gerät auf Blei untersucht. Die Proben werden gegen Standard gemessen.

### Beispiel 3 und Vergleichsbeispiel 3

Auf eine Säule mit sandigem Boden (analog den Beispielen 1 und 2 und Vergleichsbeispielen 1 und 2) wurden 5 g Tetramethylblei aufgegeben und zunächst mit luftgesättigtem Wasser (VB3) und dann mit H₂O₂ enthaltenden Wasser (100 mg H₂O₂/l) mit einer Fließgeschwindigkeit von 0,2 ml/min kontaktiert. Tabelle 2 zeigt die Ergebnisse - gesamtes organisches Blei (mg/l) im Auslauf:

**Tabelle 2**

| | Versuchstage | Gesamt. org. Blei (mg/l) |
|---|---|---|
| VB 3 | 2 | 4,8 |
| | 6 | 9,5 |
| B 3 | 8 | 19,0 |
| | 12 | 18,5 |

### Beispiele 4 bis 7

Abbau von organisch gebundenem Blei in wäßrigen Lösungen. Untersucht wurde Bleialkylverbindungen enthaltendes Grundwasser, wie es unter einem kontaminierten Boden mittels Entnahmebrunnen entnommen wurde:
pH-Wert 7,5 bis 7,8; CSB-Wert 20 bis 25 mg/l; Gehalt an organisch gebundenem Blei 440 µg/l.

Der Abbau erfolgte durch Behandlung des Wassers bei 40 °C beziehungsweise 60 °C
* Wasserstoffperoxid (500 mg H₂O₂/l)
* Fenton's Reagens (200 mg H₂O₂/l + 10 mg Fe³⁺/l)
* UV-Bestrahlung (1 kW-Mitteldruckstrahler, 5 l Reaktor)
* UV-Bestrahlung (1 kW) + 200 mg H₂O₂/l
Der Gehalt an organisch gebundenem Blei wurde gemäß der Vorschrift in Beispiel 1 bestimmt. Die Ergebnisse folgen aus Tabelle 3. Mittels UV-Bestrahlung mit oder ohne H₂O₂ wird ein rascher Abbau der Organobleiverbindungen erzielt, nicht jedoch mittels Wasserstoffperoxid allein oder Fenton's Reagens.

**Tabelle 3**

| Beispiel Nr. | Art | org. geb. Blei (µg/l) nach min. | | |
|---|---|---|---|---|
| | | 5 | 10 | 15 |
| 4 | H₂O₂ (500 mg/l); 60 °C | | | 270 |
| 5 | H₂O₂ (200 mg/l) / Fe³⁺ (10 mg/l); 60 °C | | | 300 |
| 6 *) | UV; 40 °C | 6 | <5 | |
| 7 | UV/H₂O₂ (200 mg/l); 40 °C | <5 | | |

| | | | | |
|---|---|---|---|---|
| *) Verspiegelung der UV-Lampe bei kontinuierlichen Betrieb | | | | |

### Beispiel 8

Ein aus einem kontaminierten Boden stammendes Grundwasser mit einem Gehalt von 250 bis 270 µg/l an organisch gebundenen Blei wurde nach Zugabe von Wasserstoffperoxid (50 mg/l) kontinuierlich durch einen UV-Reaktor (5 kW-Strahler) geleitet. Wie aus der Tabelle 4 hervorgeht, steigt der Abbaugrad der Organobleiverbindungen mit abnehmendem Durchfluß und damit zunehmender Strahlungsdosis (kWh/m³). Eine Zugabemenge von 50 mg H₂O₂/l Wasser reichte aus, um eine Verspiegelung der UV-Tauchlampe wirksam zu verhindern.

**Tabelle 4**

| Durchfluß (l/h) | Organisch gebundenes Blei (µg/l) | | Abbaugrad % |
|---|---|---|---|
| | Zulauf | Ablauf | |
| 1800 | 260 | 70 | 73,1 |
| 1300 | 260 | 50 | 80,8 |
| 1000 | 260 | 43 | 83,5 |
| 750 | 270 | 29 | 89,3 |
| 500 | 250 | 24 | 90,4 |
| 300 | 260 | 21 | 91,9 |
| 150 | 260 | 5 | 98,1 |

### Beispiel 9

Mit Alkylbleiverbindungen kontaminiertes Grundwasser aus einem kontaminierten Boden im Bereich einer Produktionsanlage für Alkylbleiverbindungen wurde nach Durchströmen eines Sandfilters mit 50 mg H₂O₂ pro l Wasser versetzt und durch einen UV-Reaktor mit einer 4 kW-Mitteldrucklampe geleitet - Reaktorlänge 600 mm, innerer Durchmesser 100 mm, UV-Lampe längs des Reaktors zentral angeordnet, Schichtdicke des bestrahlten Wassers 30 mm, Durchfluß im Bereich 0,2 bis 1 m³/h.

Das den UV-Reaktor verlassende Wasser wurde teilweise mit einem Flockungshilfsmittel versetzt - Art und Zugabemenge sind der Tabelle zu entnehmen. Anschließend wurde das Wasser filtriert (= Pb-Filter). Das Filtrat der Versuche 1 bis 4 wurde über einen Aktivkohleadsorber geleitet. Der Gehalt an Organo-Blei und Gesamt-Blei wurde, soweit in der Tabelle 5 angegeben, nach dem Sandfilter, nach dem Pb-Filter und dem Aktivkohleadsorber bestimmt. Die Versuche (Tabelle 5) zeigen, daß der Verwendung eines Flockungshilfsmittels eine maßgebliche Bedeutung zukommt. Bei fehlender oder ungenügender Dosierung an Flockungshilfsmittel werden keine ausreichend niedrigen Restgehalte an Gesamt-Pb (= organisch und anorganisch gebundenes Blei) erzielt. Ohne eine wirksame Pb-Filtration kommt es zu einer raschen Beladung des Aktivkohleadsorbers, was einen häufigen Filteraustausch oder eine aufwendige Regenerierung erforderlich macht. Flockungshilfsmittel vom Phosphattypus sind unwirksam.

Die Bestimmung des Gesamt-Bleigehalts erfolgte durch AAS nach Ansäuern der Proben mit 65 %iger HNO₃ (1 ml pro 100 ml Probe).

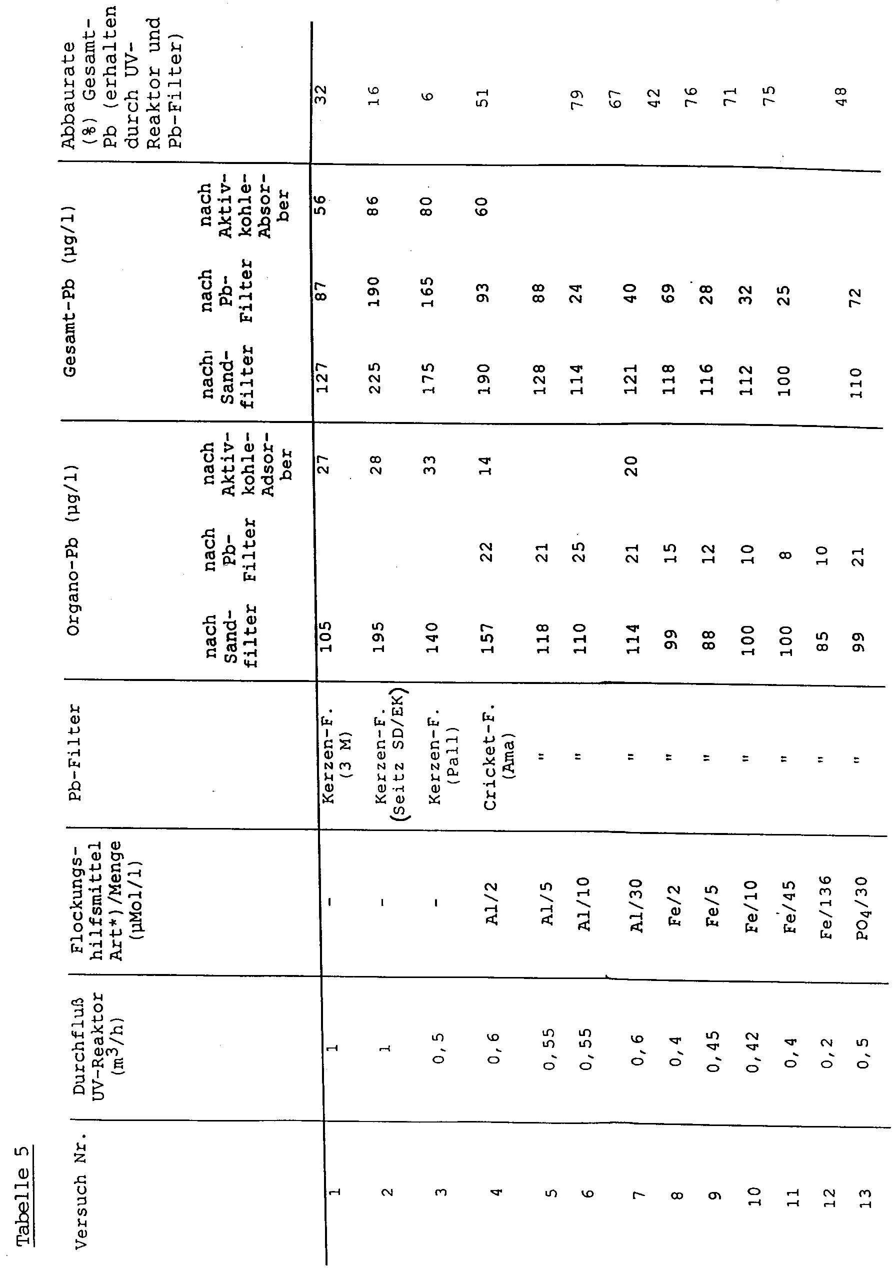

## Patentansprüche

1. Verfahren zur on-site oder off-site Dekontaminierung von mit Bleialkylverbindungen, insbesondere Tetraethylblei, kontaminierten Böden, wobei Bleiverbindungen aus dem Boden entfernt werden,
dadurch gekennzeichnet,
daß man (i) den Boden mit Wasser und einer Quelle für Sauerstoff in einer die Löslichkeit der Bleiverbindungen in Wasser wirksam steigernden Menge kontaktiert, (ii) die erhaltene wäßrige Phase vom Boden abtrennt, (iii) Bleiverbindungen aus der abgetrennten wäßrigen Phase mittels chemischer und/oder physikalischer Methoden abtrennt und (iv) das bleifreie Wasser in einen Vorfluter oder in den Boden einleitet.

2. Verfahren nach Anspruch 1,
dadurch gekennzeichnet,
daß man als Quelle für Sauerstoff Wasserstoffperoxid verwendet.

3. Verfahren nach Anspruch 1 oder 2,
dadurch gekennzeichnet,
daß man zum Kontaktieren Wasser mit einem Wasserstoffperoxidgehalt von 10 bis 1000 mg/l, vorzugsweise 30 bis 300 mg/l, einsetzt.

4. Verfahren nach einem der Ansprüche 1 bis 3,
dadurch gekennzeichnet,
daß man Wasser mit einem Wasserstoffperoxidgehalt von 10 bis 1000 mg/l über dem kontaminierten Boden versickern läßt und nach Durchströmen der wasserungesättigten Bodenzone das nun Bleialkylverbindungen enthaltende Wasser über einer wasserundurchlässigen Bodenzone mittels eines oder mehrerer Brunnen, vorzugsweise zusammen mit Grundwasser, entnimmt.

5. Verfahren nach einem der Ansprüche 1 bis 4,
dadurch gekennzeichnet,
daß man in der Stufe (iii) die Bleialkylverbindungen enthaltende wäßrige Phase nach Zugabe einer unter UV-Bestrahlung Hydroxylradikale bildenden Verbindung mit UV-Licht bestrahlt, der so behandelten wäßrigen Phase ein Flockungshilfsmittel aus der Reihe Metallhydroxidflocken bildender Metallverbindungen zusetzt, sofern erforderlich, den pH-Wert auf einen Wert im Bereich von 6 bis 8 stellt und anschließend den Niederschlag vom Wasser abtrennt.

6. Verfahren nach Anspruch 5,
dadurch gekennzeichnet,
daß man die Bleialkylverbindungen enthaltende wäßrige Phase nach Zugabe von Wasserstoffperoxid in der 0,1-bis 5-fachen, insbesondere 0,1- bis 2-fachen, äquivalenten Menge des CSB-Wertes des Wassers mittels eines oder mehrerer Hoch- oder Mitteldruck-UV-Strahler bei einem Eintrag an elektrischer Strahlerenergie von 1 bis 10 kWh pro m³ bestrahlt.

7. Verfahren nach einem der Ansprüche 5 oder 6,
dadurch gekennzeichnet,
daß man als Flockungsmittel ein wasserlösliches Eisen- oder Aluminiumsalz verwendet und je µMol Bleialkylverbindung 1 bis 1000 µMol, insbesondere 10 bis 100 µMol, Flockungsmittel einsetzt.
